Europäisches Patentamt

European Patent Office

Office européen des brevets

(19)

(11) EP 1 179 912 A1

(12) **EUROPEAN PATENT APPLICATION**

(43) Date of publication:
**13.02.2002 Bulletin 2002/07**

(51) Int Cl.7: **H04L 9/00**

(21) Application number: **00830571.6**

(22) Date of filing: **09.08.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **STMicroelectronics S.r.l.**
**20041 Agrate Brianza (Milano) (IT)**

(72) Inventors:
• **Di Bernardo, Giovanni**
**95030 Mascalucia (IT)**

• **La Rosa, Manuela**
**95014 Giarre (IT)**
• **Di Cola, Eusebio**
**98124 Messina (IT)**
• **Occhipinti, Luigi**
**97100 Ragusa (IT)**

(74) Representative: **Eccetto, Mauro et al**
**Studio Torta S.r.l., Via Viotti, 9**
**10121 Torino (IT)**

(54) **Chaotic encryption**

(57)    In order to protect the contents of an electronic document through an encryption system based on an initial confusing step in a scrambler and a subsequent diffusion step in a chaotic processor, both steps being of a chaotic type, initially (51) encryption keys ($c_j$) and an initial chaotic value ($X_0$) are acquired; input character strings (IN) are acquired (53); diffused character strings ($s(t)$) are calculated (54) using the input character strings, the encryption keys ($C_j$), and previous diffused character strings ($s(t-j)$). After a certain number of iterations, sets of diffused character strings ($S_j$) are added (63) to subsequent chaotic values (X) generated by a chaotic processor (61) to obtain encrypted words ($X_{CR}$). Decryption is obtained through two successive operations, wherein the encrypted words are added to chaotic values identical to the encryption values (X) and subtracted from previously decrypted words using an unscrambler element having a structure similar to that of the scrambler and using identical encryption keys.

Fig.9

EP 1 179 912 A1

## Description

The present invention regards a method and a device for protecting the contents of an electronic document sent on a transmission channel.

As is known, the problem has been felt of ensuring confidentiality of the information exchanged through communication means. In general, the higher the value of the information, the more appetizing it is, and consequently the higher must be the degree of security of the means or channels of communication. When the communication channel is in open to violation because it is easily accessible, the security of the communication must be guaranteed already upstream by transforming the information into a form that is comprehensible only to the actual addressees. At present, the problem of security of information does not only regard communications via systems of mobile telephony and Internet, but also the transmission of written texts or musical documents (e.g., books and music scores) diffused by electronic route through the Web or on media such as CDs and DVDs, where there is the problem of defending the copyright. In particular, protection of copyright is assuming an ever increasing importance in view of the major economic interests linked to the communications media.

Cryptography has always proposed as the art that has sought, through the most robust mathematical methods, the algorithms for protecting the security of communications, ensuring transformation of the information into an incomprehensible form, and of course enabling complete recovery of the original information for the authorized subjects. In assessing encryption systems, account must be taken of the aims that they have. First of all, it is necessary to distinguish the types of attack which the encryption system will have to stand up to. The types of attack are mainly divided into two categories: active attacks and passive attacks. The former type of attack aims at tampering with an original message, with the possibility for an eavesdropper of interacting directly with the sender and the recipient, in order to use the communication channel (erroneously believed to be secure by the parties) for his own purposes (transactions, stipulation of contracts, intimidation, acts of piracy and computer terrorism, etc.). In a passive attack, the computer pirate limits himself to listening in to and deciphering the information, deemed secret, which travels on a channel in an encrypted form. A copyright protection system falls within the latter context, given that the purpose of the protection is to render the production of pirate copies of the documents protected impossible for non-authorized users.

At present, the need is felt to create particularly robust encryption systems, taking into account that the availability of increasingly powerful computing means and of resources of shared computation ("network computing") has enabled successful attack on the most powerful existing encryption algorithms, which, up to just a few years ago were deemed "unbreakable", such as DES (Data Encryption Standard, FIPS 46/77), which envisages more than $70*10^{15}$ combinations of possible keys (56 bit).

Encryption systems may basically be divided into two categories: symmetric-key systems and public-key systems.

A symmetric-key system is based on the adoption, by the sender and the addressee, of a same key for encryption, and subsequently decryption, of the transmitted information. According to this system, therefore, before exchanging any information, the sender and addressee must define and/or exchange the key, and then encrypt with this key all the items of information to be exchanged.

The advantage of the symmetric-key system lies in the fact that the encrypted document can be decrypted only by a person who knows the key and has the responsibility of keeping it secret. The disadvantage lies in the fact that, in the event of a number of subjects in a group having to exchange information between one another and at the same time keep it secret from the other members of the group, the number of keys increases rapidly with the number of members in the group. For $n$ subjects, the number of required keys is $n(n\text{-}1)/2$.

In a public-key system, a mathematical algorithm enables the use of two distinct keys, one for encrypting and the other for decrypting a message. A first key is consequently used for the encrypting step and is rendered public. Whoever wants to send a message, simply has to take the public key of the addressee from a list of public keys. The thus encrypted message can be decrypted only by the recipient of the message, who uses a private key that is known only to himself.

This enables a number of senders to send encrypted messages to a single addressee (using the public key) without other possible users being able to decipher it.

The mechanism at the basis of the most famous public-key encryption algorithm, RSA (after the names of the inventors, Rivest, Shamir and Adleman), is the factoring of numbers with various decimal figures, for which the reader is referred to the relevant literature.

The public-key system has the advantage that only the private key must be kept secret, and the number of keys required for exchanging information within a network is quite contained as the number of users increases (it being equal to $n(n\text{-}1)/2$.

The disadvantage lies in the fact that the keys must necessarily be long, i.e., with not less than 512 bits. This leads to a considerably low computing speed, with a consequent low throughput rate. In addition, it has never been demonstrated that any algorithm is really secure, since it has never been demonstrated that the factorization, that is the solution on which the algorithm is based, cannot be solved, even though this has never been found.

A public-key system is not useful in a content protection system. In fact, in this case, where it is necessary to prevent piracy acts on multimedia products or individually on texts, sound or image recordings, it is necessary to guarantee a high decryption speed. Furthermore, it would not be reasonable to get the end user, namely the recipient of the multimedia product, to choose the pair of keys, i.e., both the public key and the private key.

US patent 4,434,322 describes a system for transmitting coded data which can be used on a transmission channel enabling communication between two users. In this known system, a data scrambling algorithm is implemented which randomizes the information and in which it is essential to ensure synchronization of the users to enable communication of the information. Consequently, this system is not suitable for the considered application.

The aim of the present invention is therefore to provide a system for protecting information transmitted or stored on an electronic medium, which has a high degree of security.

According to the present invention, there are provided a method and a device for protecting the contents of an electronic document, as defined in Claim 1 and Claim 13, respectively.

For a better understanding of the present invention, a preferred embodiment thereof is now described only as a nonlimiting example, with reference to the attached drawings, wherein:

- Figures 1a, 1b, 1c, and 1d show different diagrams of a random signal;
- Figure 2 shows a block diagram of an encryption device belonging to the protection system according to the present invention;
- Figure 3 shows a block diagram of the decryption device belonging to the present protection system;
- Figure 4 shows the architecture of the encryption and decryption devices of Figures 2 and 3;
- Figure 5 is a block diagram of the unscrambler/ scrambler of Figure 4;
- Figure 6 shows the architecture of the unscrambler/ scrambler of Figure 5;
- Figure 7 shows a block diagram of the chaotic generator of Figure 4;
- Figure 8 shows a bifurcation diagram of the chaotic map generator of Figure 7;
- Figure 9 shows a flow chart of the operations performed by the control unit of Figure 4;
- Figures 10a and 10b show the probability distribution of the symbols before and after encryption of a test text;
- Figures 11a and 11b show the mapping of the bits of an original image and of the same image encrypted; and
- Figure 12 shows the probability distribution for the images of Figures 11a and 11b.

The present invention uses some fundamental properties of the signals generated by dynamic circuits in chaotic evolution. In fact, for those who study this particular type of nonlinear dynamic circuits it is known that a circuit in chaotic evolution is extremely sensitive to the variations imposed on the parameters that determine the complex dynamics and to the initial conditions from which this dynamics starts.

In practice, the signals that are generated by two circuits defined by parameters which differ from one another by an amount however small or by two identical circuits that evolve starting from initial conditions that differ very little with respect to one another tend to diverge in a very short time, evolving in time in an absolutely uncorrelated way (sensitivity to parameters and to starting conditions).

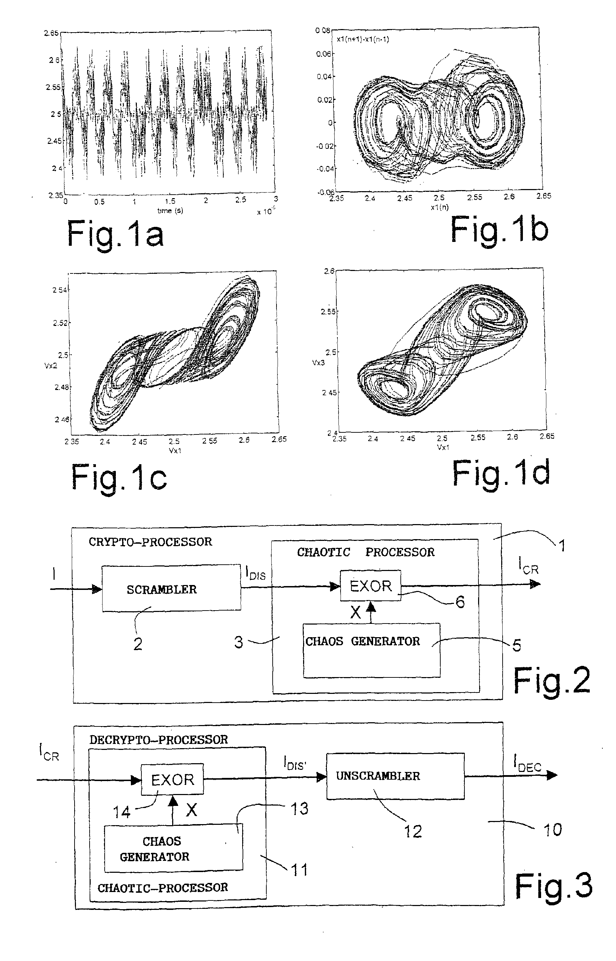

The typical pattern of a chaotic signal closely resembles that of a random signal the value of which in the instant $t + \Delta t$ cannot be foreseen the more in the instant t, the greater is $\Delta t$. Also from the statistical point of view, a chaotic process is, by its very nature, a non-stationary process and, in particular, a non-periodic process; consequently, its frequency content continuously changes its distribution (randomness). The analysis of a chaotic signal frequently uses qualitative representation models, such as, in particular, phase diagrams or Poincaré maps. Figures 1a1d represent these diagrams in the case of a typical chaotic circuit with three state variables. In particular, Figure 1a shows the pattern of the signals representing the three state variables in time. Figure 1b provides an example of a phase diagram obtained by representing any one of the state variables- x(t) with respect to the value that the same variable assumes at the instant $(t - \tau)$, where $\tau$ is arbitrary. Finally, Figures 1c and 1d show the attractors in state form that are obtained by representing each state variable with respect to another (Poincaré map).

The present protection system moreover uses a scheme based on an initial confusion step and a subsequent diffusion step. As is known, the principle of confusion is satisfied by the use of transformations that complicate the statistical dependence of the encrypted text with respect to the statistics of the original text. The principle of diffusion regards the process of dispersion of the influence of a single element of the original text on all the elements that form the encrypted document (implemented by a scrambler stage).

According to one aspect of the invention (Figure 2), a crypto-processor 1 comprises a scrambler stage 2 which implements the diffusion step, and a chaotic processor 3 which implements the diffusion step. The scrambler 2 receives information I to be encrypted and generates scrambled information $I_{DIS}$ that is supplied to the chaotic processor 3; in turn, the chaotic processor 3 outputs encrypted information $I_{CR}$.

The chaotic processor 3 comprises a chaos generator 5 outputting a chaotic signal X which is mixed with the scrambled information $I_{DIS}$ through an invertible operator. In particular, the chaotic signal X is supplied to an EXOR gate 6, which also receives the scrambled information $I_{DIS}$ and outputs the encrypted information $I_{CR}$.

For decrypting the encrypted information $I_{CR}$, a decrypto-processor 10 is provided (Figure 3), which comprises a chaotic processor 11 that receives the encrypted information $I_{CR}$, and an unscrambler that outputs the decrypted information $I_{DEC}$. The chaotic processor 11, like the chaotic processor 3 of Figure 2, comprises a chaos generator 13, which is identical to the chaos generator 5 (and thus has the same initialization conditions and the same bifurcation parameter), and an EXOR gate 14 that receives the encrypted information $I_{CR}$ and the chaotic signal X issued by the chaos generator 13. Thanks to the properties of the EXOR, the information $I_{DIS'}$, at the output of the EXOR gate 14, is the same as the scrambled information $I_{DIS}$ at output from the scrambler 2 of Figure 2. The unscrambler 12, which has a similar structure to that of the scrambler 2 and which uses the same key (as described hereinafter), thus supplies decrypted information $I_{DEC}$ corresponding to the original information I.

The bus connected between the scrambler 2 and the chaotic processor 3 of Figure 2 and the bus connected between the chaotic processor 11 and the unscrambler 12 in Figure 3 are inaccessible. Consequently, the information present on these buses is not available for a possible hacker.

In practice, the scrambler 2 of the crypto-processor 1, which generates the confusion, generates an encrypted text that is as disturbed as possible but that is reversible. The chaotic processor 3, which is responsible for diffusion, subjects the disturbed text to an additional encryption step using an invertible operator and chaotic values, so increasing the level of security.

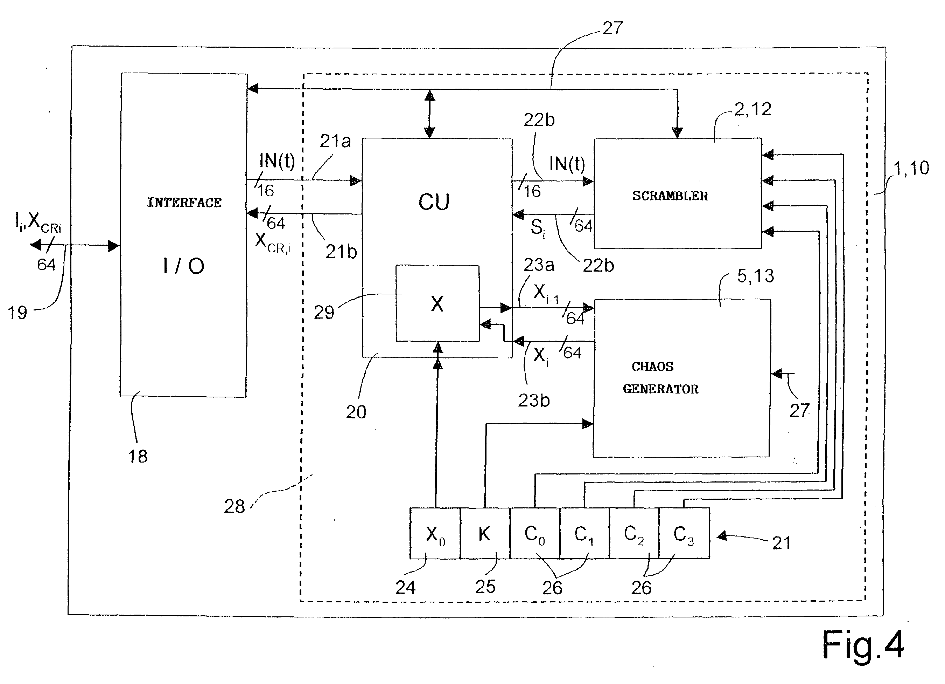

An example of the architecture of the crypto-processor 1 of Figure 2 is illustrated in Figure 4. In detail, the crypto-processor 1 comprises an input/output interface 18, a control unit 20, the scrambler stage 2, the chaos generator 5, and a storage area 21.

The input/output interface 18 is connected to the outside through a 64-bit bidirectional bus 19 and to the control unit 20 through a pair of unidirectional buses, namely, a 16-bit unidirectional bus 21a and a 64-bit unidirectional bus 21b, that carry an input word IN(t) and an encrypted word $X_{CRi}$. The control unit 20 is connected to the scrambler stage 2 via a pair of unidirectional buses, namely, a 16-bit unidirectional bus 22a (receiving the input word IN(t)) and a 64-bit unidirectional bus 22b (supplying a scrambled word $S_i$), as well as to the chaos generator 5 via a pair of 64-bit unidirectional buses 23a, 23b, carrying a previous chaotic value $X_{i-1}$ and, respectively, a current chaotic value $X_i$. The storage area 21 comprises a plurality of storage locations 24, 25 and 26 storing, respectively, an initial chaotic value $X_0$ supplied to the chaos generator 5, a parameter K supplied directly to the chaos generator 5, and four multiplication co-

efficients $c_0$-$c_3$ supplied to the scrambler stage 2. Each multiplication coefficient $c_0$-$c_3$ comprises two bytes. Together, the multiplication coefficients $c_0$-$c_3$ form the key of the scrambler stage 2.

The control unit 20 comprises a state machine and includes a register 29 storing the current chaotic value X of the chaotic signal. The register 29 is then connected to the location 24 to receive, at the beginning, the initial value $X_0$ of the chaotic signal X and to the chaos generator 5 to supply the previous value $X_{i-1}$ calculated in the (i-1)-th iteration and to receive the value $X_i$ calculated in the i-th iteration, as described in greater detail hereinafter. Furthermore, the control unit 20 sends control signals to the interface 18, to the scrambler 2, and to the chaos generator 5 via a control bus 27 so as to synchronize the operations.

The scrambler 2, the chaos generator 5, the storage area 21, the control unit 20, and all the lines that connect them, except for the interface 18, are formed in a protected area, or secret area, of a silicon chip (defining a smart card) which integrates the crypto-processor 1. In particular, the secret area is covered by a metal layer 28, so that all the operations performed inside the secret area remain hidden to the outside.

The decrypto-processor 10 of Figure 3 has an architecture similar to that of the crypto-processor 1, except for the fact that the bus 16 is a 64-bit bus as explained hereinafter.

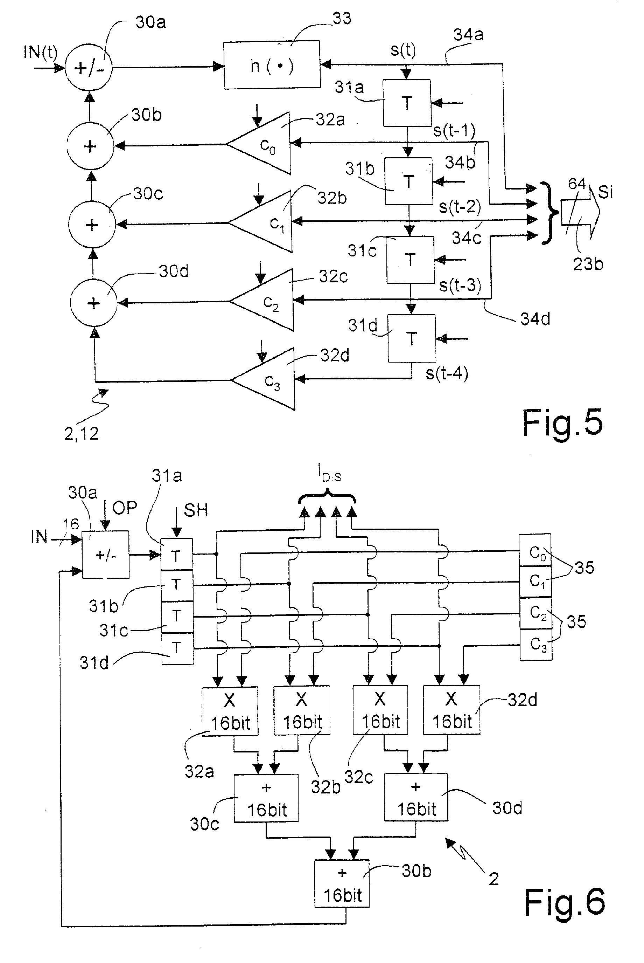

The block diagram of the scrambler 2 and of the unscrambler 12 is illustrated in Figure 5. In detail, the scrambler 2 comprises four adders 30a-30d, four delay elements 31a-31d, four multipliers 32a-32d, a transfer block 33 implementing a transfer function of a reversible type, for example the identity h(x)=x, and four 16-bit output lines 34a-34d.

In detail, the adder 30a receives the input word IN(t) and the output of the adder 30b. The transfer block 33 is connected between the output of the adder 30a and the output line 34a. The delay elements 31a-31d comprise 16-bit shift registers and are cascade-connected to each other and to the transfer block 33. Each multiplier 32a-32c is connected between the output of a respective delay element 31a-31c and an input of a respective adder 30b-30d, while the multiplier 32d is arranged between the output of the delay element 31d and a second input of the adder 30d. The adders 30b and 30c have an own second input respectively connected to the output of the adder 30c and the output of the adder 30d.

All the shown lines of the scrambler 2 are 16-bit lines, and the four output lines 34a-34d together form the unidirectional bus 23b on which a 64-bit block forming a scrambled word $S_i$ is supplied.

In the scrambler 2 of Figure 5, the operations of addition and multiplication are defined within a Galois field (adder operator with modulus). The delay elements 31a-31d shift, at each clock cycle, strings of 16-bit scrambled characters s(t)-s(t-3) supplied to the output lines 34a-34d. At start of processing of a document or text, each delay element 31a-31d is initialized with two respective bytes $c_0$-$c_3$ of the key of the crypto-processor 1 supplied by the storage area 21 (Figure 4). In the initialization step, also the multipliers 32a-32d receive two respective bytes $c_0$-$c_3$ of the key, which represent the multipliers by which the strings of scrambled characters s(t-1), s(t-2), s(t-3), s(t-4) shifted by the delay elements 31a-31d are multiplied.

At each processing cycle, the 64 bits of a word to be encrypted $I_i$ are supplied, in four 64-bit successive steps, to the scrambler 2 (input word IN(t)). In each step, each string of scrambled characters s(t-1), s(t-2), s(t-3), s(t-4) (initially formed by the two bytes of the key that are stored in the delay elements 31a-31d) is multiplied by the corresponding parameter $c_j$ and, of the 32-bit result, the 16 most significant bits are discarded, thereby performing an addition-with-modulus operation, i.e., an addition defined in a Galois field. The words thus obtained are then added to the input word IN(t) to progressively and substantially decrementing the correlation level.

In the subsequent cycles, instead, the strings of scrambled characters s(t-1), s(t-2), s(t-3), s(t-4) of the previous cycle are mixed with the blocks of subsequent words to be encrypted, so increasing the uncorrelation level.

The scrambler 2 is therefore a nonlinear system having chaotic characteristics, which generates at the output a 64-bit block (scrambled word $S_i$), the statistical distribution of which is independent of the input block (word to be encrypted $I_i$ - Figure 4).

The unscrambler 12 of Figure 3 has the same structure as the scrambler 2 of Figure 5, except for the fact that the adder 30a which receives the input word IN(t) is replaced by a subtractor, which subtracts from the input word IN(t) the word supplied by the output of the adder 30b so as supply (on the output lines 34a-34d) a decrypted word $I_{DECi}$.

Figure 6 shows the preferred architecture of the scrambler 2. In Figure 6, where the same reference numbers have been used as in Figure 5, the multipliers 32a-32d multiply the delayed words at the outputs of the delay elements 31a-31d by the multiplication coefficients $c_0$-$c_3$ stored in registers 35. Figure 6 also shows a control signal SH which determines down-shifting of the contents of the registers T forming the delay elements 31a-31d, and a control signal OP which selects the addition or subtraction operation for the block 30a according to its operation as scrambler 2 or unscrambler 12.

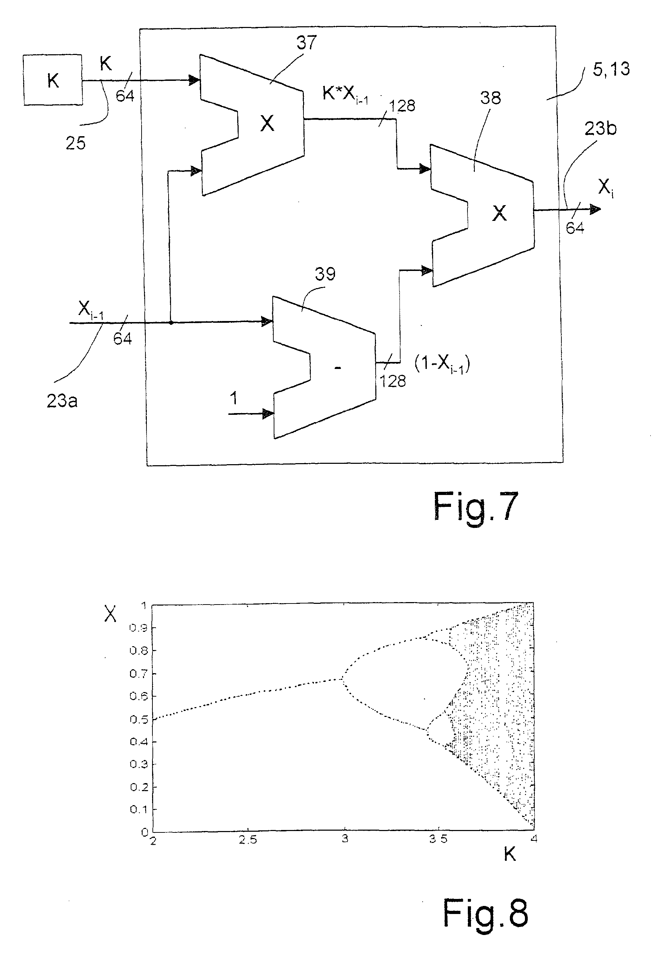

Figure 7 shows the block diagram of the chaos generator 5. The chaos generator 5 includes a combinatorial logic comprising a first multiplier 37, a second multiplier 38, and a subtractor 39. In detail, the first multiplier 37 has two inputs, one of which receives the parameter K from the storage location 25, and the other receives the previous chaotic value $X_{i-1}$ from the register

29 (Figure 4), and a 128-bit output connected to an input of the second multiplier 38. The subtractor 39 has a first input which receives the previous chaotic value $X_{i-1}$, a second input which receives a value 1, normalized at 64 bit, and a 128-bit output connected to the second input of the second multiplier 38. The 64-bit output of the second multiplier 38 supplies, on the line 23b, the current 64-bit chaotic value $X_i$.

The chaos generator 5 implements the function $f_k(x)=Kx(1-x)$, with $0<x<1$ and $3.6<K<4$, where $K$ is the bifurcation parameter of the chaotic system. The above function (see Figure 8) ensures that the chaotic values $X_j$ define an uncorrelated sequence, which is then used to encrypt the scrambled word $S_i$ supplied by the scrambler 2.

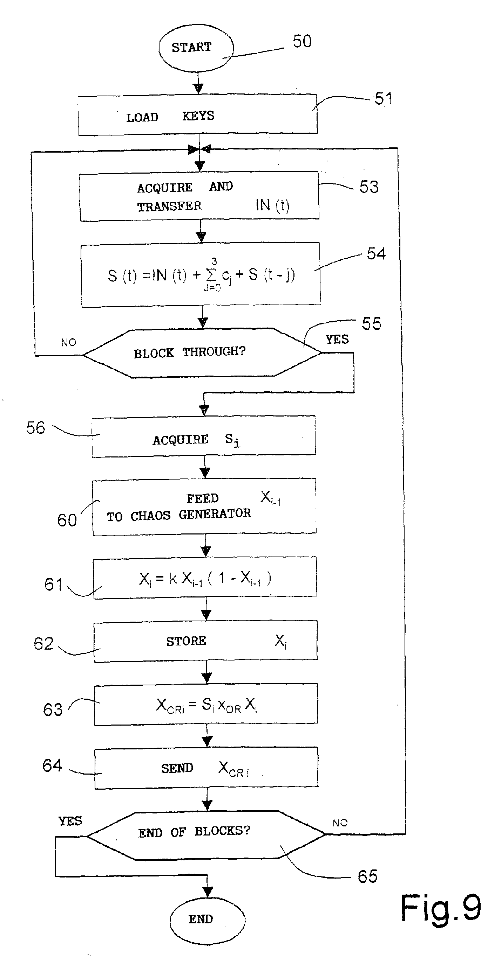

Figure 9 shows a flow chart of the operations performed by the crypto-processor 1 and controlled by the control unit 20, which, according to the above, is preferably a state machine.

At the beginning, the control unit 20 is activated when it receives a reset signal which determines its initialization (step 50). Then, it loads from the storage area 20 the system keys in the appropriate registers: the parameters $c_j$ are loaded in the registers forming the delay elements 31a-31d (Figures 5 and 6) and in the registers 35 (Figure 6), while the initial chaotic value $X_0$ is loaded in the register 29 of the control unit 20 (step 51). A clock signal (not shown) scans the events and synchronizes the entire crypto-processor 1.

At each clock pulse, the control unit 20 acquires, via the I/O interface 18, a 16-bit input word IN(t) and sends it to the scrambler 2 (step 53). The scrambler 2 then proceeds to adding the input word IN(t) to the products of coefficients $c_j$ and the contents of the delay elements 31a-31d, as explained previously with reference to Figure 4 (step 54). Upon receiving the control signal SH supplied by the control unit 20, the contents of the delay elements 31a-31d shift downwards. After four iterations (output YES from block 55), a 64-bit block has been scrambled and is supplied to the control unit 20 as scrambled word $S_i$ (step 56).

Next, the control unit 20 issues a command for the chaos generator 5 to calculate a new current chaotic value $X_i$. To this end, it supplies the previous chaotic value $X_{i-1}$ to the chaos generator 5 (step 60). The chaos generator 5 calculates the current chaotic value $X_i$ (step 61) and sends it to the control unit 20, which stores it in the register 29 instead of the previous value $X_{i-1}$ (step 62).

Then, the control unit 20 calculates the encrypted word $X_{CRi}$, executing the EXOR operation between the scrambled word $S_i$ and the current chaotic value $X_i$ (step 63), and supplies the result, i.e., the encrypted word $X_{CRi}$ to the I/O interface 18 (step 64).

The described operation sequence, from step 52 to step 64, continues until blocks of words to be encrypted $I_i$ (output NO from block 65) are supplied; then it terminates.

The described crypto-processor 1 has been subjected to simulation with the purpose of studying the degree of security of the system from the standpoint of cyclicity and of the index of coincidence, using a sample text in Italian.

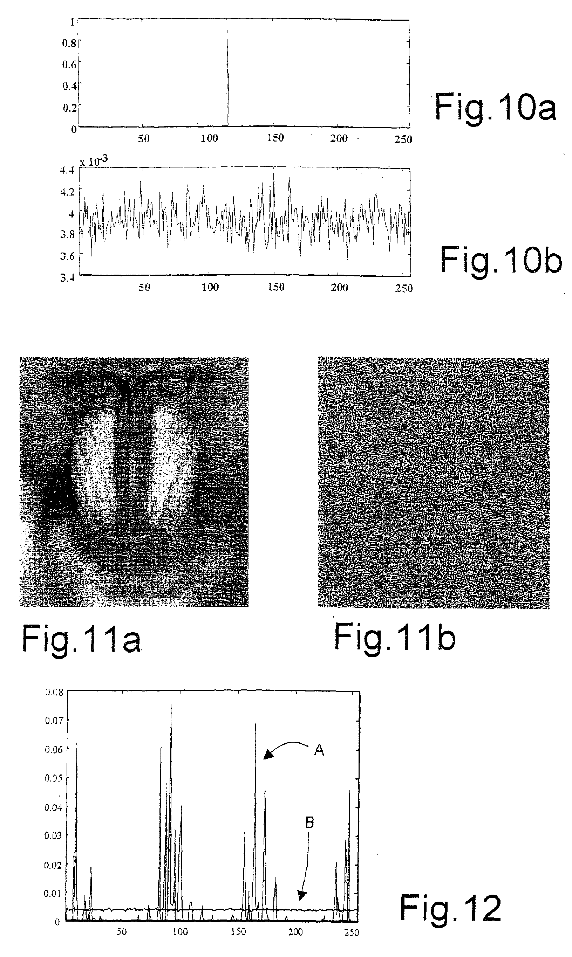

Applying the present encryption method as encryption algorithm to a sample language text, the coincidence index was calculated on an alphabet of 256 symbols (ASCII code). The application of Friedman's formula (k-test) to the text yielded a value of I=0.003873, i.e., just above the theoretical minimum value of $I_{min}$=0.003607. An even more critical test was conducted on a text formed by the repetition of a single character. The result of this test yielded an index of I=0.003906, whereas the theoretical minimum is $I_{min}$= 0.003900. Figure 10a gives the percentage distributions of 256 symbols in a text formed by the repetition of a single character, and Figure 10b shows the percentage distributions of the symbols after encryption using the method described herein.

A further evaluation was carried out considering a bit map image (Figure 11a). In this case, an index of I=0.003907 was obtained, as against an $I_{min}$=0.003890. As may be noted from Figure 11b (corresponding to the image of Figure 11a after encryption), the content of information is completely dispersed. The image after processing is in fact completely uncorrelated, as is highlighted in the percentage distributions of the symbols in Figure 12, where the curve A refers to the original image of Figure l1a, and the curve B refers to the encrypted image of Figure 11b.

The advantages of the described method and device are illustrated hereinafter. First, as discussed above, the method and device yield encrypted texts with a high degree of security. The fact of using a symmetric type key (formed by the bifurcation parameter K and the initial value $X_0$) stored in an inaccessible area rules out the problems of synchronization that are present in public key systems. Consequently, texts and documents may be encrypted and sent on a public network (Internet) or supplied on an electronic medium, since the key may be supplied by a dealer only to an own customer. The encryption system thus comprises a reader (such as a DVD) and a medium (for example, a smart-card), and enables protection of the contents of documents protected by copyright without the risk of non-authorized users (i.e., ones who do not possess the key) being able to gain access to the encrypted contents.

Finally, it is clear that numerous variations and modifications may be made to the method and device described and illustrated herein, all falling within the scope of the invention as defined in the attached claims.

## Claims

1. A method for protecting the contents of an electronic document, **characterized by** the steps of:

   confusing characters belonging to an electronic input document (I) through an invertible scrambler (2) to obtain a confused document ($I_{DIS}$) ; and
   diffusing (3) said confused document by mixing it with chaotic characters (X) to obtain an encrypted document ($I_{CR}$).

2. A method according to Claim 1, **characterized in that** said confusing step comprises carrying out operations defined within a Galois field.

3. A method according to Claim 1 or 2, in which said electronic input document (I) comprises a plurality of strings of characters to be encrypted (IN), and said confused document ($I_{DIS}$) comprises a plurality of confused characters (s), **characterized in that** said confusing step comprises adding each string of characters to be encrypted (IN) to strings of confusing characters obtained by multiplying said strings of confused characters (s) by respective multiplication constants ($c_j$).

4. A method according to Claim 3, **characterized in that**, before being multiplied by said multiplication constants ($c_j$), said strings of confused characters (s) are delayed.

5. A method according to any of the foregoing claims, in which said confused document ($I_{DIS}$) comprises a plurality of strings of confused characters (s), **characterized in that** said diffusing step comprises generating chaotic characters (X) through a chaos generator (5) and mixing said strings of confused characters (s) with said chaotic characters (X).

6. A method according to Claim 5, **characterized in that** said mixing step comprises performing an exclusive OR operation (6).

7. A method according to Claim 5 or 6, **characterized in that** said chaos generator (5) implements the function:

$$f_k(x)=Kx(1\text{-}x).$$

8. A method according to any of the foregoing claims, **characterized by** the sequence of the steps of:

   a) loading (51) encryption keys ($c_j$) into shift registers (35) of said invertible scrambler (2) and an initial chaotic value ($X_0$) into a chaotic-value register (29);
   b) acquiring (53) an input character string (IN);
   c) calculating (54) a diffused character string (s(t)) using said input character string, said encryption keys ($c_j$), and the contents of said shift registers (35);

d) feeding said diffused character string (s(t)) to said shift registers, issuing a command for a shift operation for said shift registers;

e) repeating said steps b), c) and d) a preset number of times to obtain a plurality of said confused character strings ($S_i$) ;

f) calculating (61) a subsequent chaotic value (X), using the contents of said chaotic value register (29);

g) adding (63) said plurality of confused character strings ($S_i$) to said subsequent chaotic value (X) to obtain an encrypted word ($X_{CR}$) ;

h) storing (62) said subsequent chaotic value in said chaotic value register (35); and

i) repeating said steps b)-h).

9. A method according to Claim 8, **characterized in that** step c) uses the following relation:

$$s(t) = IN(t) \oplus \sum_{j=0} c_j \oplus s(t-j)$$

in which *IN(t)* is said input character string, $c_j$ are said encryption keys, *s(t - j)* are the contents of said shift registers (35), and *s(t)* is said diffused character string.

10. A method according to Claim 8 or 9, **characterized in that** said step f) uses the following relation:

$$f_k(x)=Kx(1-x),$$

where *K* is a bifurcation parameter of a chaotic system.

11. A method for unprotecting the contents of an electronic document protected using the method according to any of the foregoing claims, **characterized by** decrypting said encrypted document by mixing (11) it with said chaotic characters (X) and unscrambling through an unscrambler (12) opposite to said scrambler (2).

12. A method for unprotecting the contents of an electronic document protected using the method according to Claim 3, in which said encrypted document ($I_{CR}$) comprises a plurality of encrypted character strings, **characterized by** decrypting said encrypted document through a first (11) and a second decryption operation (12), in cascade, said second decryption operation (12) supplying a plurality of decrypted character strings, said first decryption operation (11) comprising a mixing step wherein said encrypted character strings are mixed with said chaotic characters (X) to obtain a plurality of predecrypted character strings ($I_{DIS'}$), and said second decryption operation comprising an unscrambling step by subtracting (30a) each predecrypted character string from feedback character strings obtained by multiplying said decrypted character strings by said multiplication constants ($c_j$).

13. A device for protecting the contents of an electronic document, **characterized in that** it comprises:

a confusion block (2) for confusing an electronic input document (I), said confusion block comprising an invertible scrambler (2) that supplies a confused document ($I_{DIS}$); and
a diffusion block (3) cascade-connected to said confusion block, said diffusion block comprising mixing means (6) for mixing said confused document with chaotic characters (X), which supply an encrypted document ($I_{CR}$).

14. A device according to Claim 13, **characterized in that** said scrambler (2) comprises operators acting within a Galois field.

15. A device according to Claim 13 or 14, **characterized in that** said scrambler (2) comprises an adding element (30a) having a first and a second input, said first input receiving a string of characters to be encrypted (IN) that belong to said electronic input document (I); a plurality of shift registers (31a-31d) cascade-connected to one another and to said adding element; a plurality of multiplier elements (32a-32d), each having an input connected to an output of a respective shift register (31a-31d) and to an own output; a plurality of adding nodes (30b-30d) cascade-connected, each adding node having an input connected to said output of a respective multiplier element (32a-32c), an adding node (30d) being arranged upstream and having a second input connected to a last multiplier element (32d) of said multiplier elements, and an adding node (30b) being arranged downstream and having an output connected to said second input of said adding element (30a).

16. A device according to any of Claims 13-15, **characterized in that** said mixing means (6) comprise an EXOR, and **in that** said diffusion block comprises a chaos generator (5).

17. A device according to Claim 16, **characterized in that** said chaos generator (5) implements the following function:

$$f_k(x)=Kx(1-x)$$

where $K$ is a bifurcation parameter of a chaotic system.

18. A device according to any of Claims 13-15, comprising, integrated in one first chip, a logic control unit (20), a scrambler- unit (2) connected to said logic control unit, a chaos generator (5) connected to said logic control unit, a secret storage area (21) storing encryption keys ($c_j$) for said scrambler unit (2) and an initial chaotic value ($X_0$) for said chaos generator (5).

19. A device for unprotecting (10) the contents of an encrypted electronic document supplied by a protection device (1) according to any of Claims 13-18, comprising, integrated in a second chip, a logic control unit (20), an unscrambler unit (12) connected to said logic control unit, a chaos generator (13) connected to said logic control unit, a secret storage area (21) storing encryption keys ($c_j$) for said unscrambler unit (12) and an initial chaotic value ($X_0$) for said chaos generator.

20. A device according to Claims 18 and 19, **characterized in that** said first and said second chips comprises each a coating metal layer (28) covering a respective logic control unit (20), a respective scrambling/unscrambling unit (2, 12), a respective chaos generator (5, 13), and a respective secret storage area (21).

Fig.1a

Fig.1b

Fig.1c

Fig.1d

Fig.2

Fig.3

9

Fig.4

EP 1 179 912 A1

Fig.5

Fig.6

Fig.7

Fig.8

Fig.9

START — 50

LOAD KEYS — 51

ACQUIRE AND TRANSFER IN (t) — 53

$$S(t) = IN(t) + \sum_{J=0}^{3} c_j + S(t-j)$$ — 54

BLOCK THROUGH? — 55
NO / YES

56 — ACQUIRE $S_i$

60 — FEED $X_{i-1}$ TO CHAOS GENERATOR

61 — $X_i = k\,X_{i-1}(1-X_{i-1})$

62 — STORE $X_i$

63 — $X_{CRi} = S_i\,x_{OR}\,X_i$

64 — SEND $X_{CRi}$

END OF BLOCKS? — 65
YES / NO

END

Fig.10a

Fig.10b

Fig.11a

Fig.11b

Fig.12

**European Patent Office**

## EUROPEAN SEARCH REPORT

Application Number

EP 00 83 0571

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | DACHSELT F ; KELBER K ; SCHWARZ W ; VANDEWALLE J : "Chaotic versus classical stream ciphers-a comparative study " ISCAS '98. PROCEEDINGS OF THE 1998 IEEE INTERNATIONAL SYMPOSIUM ON CIRCUITS AND SYSTEMS, vol. 4, 31 May 1998 (1998-05-31) - 3 June 1998 (1998-06-03), pages 518-521, XP002161204 Monterey, CA, USA * the whole document * | 1-20 | H04L9/00 |
| Y | CAPONETTO, R.; DI BERNADO, G.; DI COLA, E.; OCCHIPINTI, L.: "A new chaotic system for the authentication and electronic certification procedures" PROCEEDINGS OF ICECS '99, THE 6TH IEEE INTERNATIONAL CONFERENCE ON ELECTRONICS, CIRCUITS AND SYSTEMS, vol. 3, 1999, pages 1235-1238, XP002161205 ISBN: 0-7803-5682-9 * page 1236; figures 1-4 * | 1-20 | |
| A | STALLINGS, W.: "Cryptography and network security: principles and practice--2nd ed." 1999 , PRENTICE-HALL, INC. , UPPER SADDLE RIVER, NEW JERSEY 07458, USA XP002161206 ISBN: 0-13-869017-0 * page 60 - page 61 * * page 540 - page 541 * | 1-20 | TECHNICAL FIELDS SEARCHED (Int.Cl.7) H04L |

-/--

The present search report has been drawn up for all claims

| Place of search | Date of completion of the search | Examiner |
|---|---|---|
| BERLIN | 22 February 2001 | Carnerero Álvaro, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 00 83 0571

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | DACHSELT F ET AL: "DISCRETE-TIME CHAOTIC ENCRYPTION SYSTEMS-PART III: CRYPTOGRAPHICAL ANALYSIS" IEEE TRANSACTIONS ON CIRCUITS AND SYSTEMS I: FUNDAMENTAL THEORY AND APPLICATIONS,IEEE INC. NEW YORK,US, vol. 45, no. 9, September 1998 (1998-09), pages 983-988, XP000851295 ISSN: 1057-7122 * page 983 - page 984 * * page 988 * | 1-20 | |
| | | | **TECHNICAL FIELDS SEARCHED (Int.Cl.7)** |

The present search report has been drawn up for all claims

| Place of search | Date of completion of the search | Examiner |
|---|---|---|
| BERLIN | 22 February 2001 | Carnerero Álvaro, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)